# EUROPEAN PATENT APPLICATION

(11) **EP 4 406 978 A1**
(43) Date of publication of application: **31.07.2024**
(21) Application number: 22960619.9
(22) Date of filing: 01.12.2022
(51) Int. Cl.: C08F 4/6592

(54) **METALLOCENE COMPOUND, PREPARATION METHOD AND USE**

(30) Priority: 26.09.2022 CN 202211178402
(71) Applicant: PetroChina Company Limited, Dongcheng District Beijing 100007 (CN)
(72) Inventor: WANG, Yulong, Beijing 100007 (CN); LI, Hongpeng, Beijing 100007 (CN); ZHAO, Simeng, Beijing 100007 (CN); LIU, Tong, Beijing 100007 (CN); WANG, Xiuhui, Beijing 100007 (CN); ZHAO, Tiekai, Beijing 100007 (CN); XU, Xianming, Beijing 100007 (CN); ZHANG, Yongjun, Beijing 100007 (CN); JI, Yonggang, Beijing 100007 (CN); MA, Kecun, Beijing 100007 (CN)
(74) Representative: Vossius & Partner Patentanwälte Rechtsanwälte mbB
(86) International application number: PCT/CN2022/135851
(87) International publication number: WO 2024/066024

(57) **Abstract**

The present application provides a metallocene compound, and a preparation method and application thereof. The metallocene compound of the present application includes a structure as shown in Formula a, where Ar is selected from a substituted or unsubstituted C6-C30 aryl; Cp' is selected from a substituted or unsubstituted cyclopentadienyl, indenyl, or fluorenyl; X is at least one of halogen, substituted or unsubstituted C1-C30 alkyl, alkoxy, substituted or unsubstituted C2-C30 dialkylamino, alkenyl, or substituted or unsubstituted C6-C30 aryl; and M is a transition metal element. The metallocene compound is suitable for catalyzing a C6-C30 long straight chain α-olefin raw material and also a mixed long branched chain non-terminal olefin raw material, and may obtain a polymerization product with a target molecular weight according to demand.

## Description

This application claims priority to Chinese Patent Application No. 202211178402.1, filed on September 26, 2022 with the China National Intellectual Property Administration and entitled "METALLOCENE COMPOUND, AND PREPARATION METHOD AND APPLICATION THEREOF", which is hereby incorporated by reference in its entirety.

### TECHNICAL FIELD

The present application relates to the field of metallocene compounds catalysis technologies and, in particular, to a metallocene compound, and a preparation method and application thereof.

### BACKGROUND

Preparation of metallocene compounds and applications thereof in catalyzing a polymerization of olefin have always been hot topics in chemical research.

In 1990, US6548686 B2 disclosed a preparation method of a class of transition metal compounds with a constrained geometry configuration and an application thereof. The structure of the compounds is shown in Formula 1. This class of compounds can be applied to catalyzing polymerization or copolymerization of short chain olefins such as ethylene, propylene, butene, butadiene, and 1-hexene.

In 1997, Marks designed and synthesized two metallocene catalysts with a constrained geometry configuration containing a phenoxy side chain (see Formulas 2 and 3) by a "one-pot reaction". This type of catalyst is mainly used for catalyzing the polymerization of ethylene and propylene.

In 1998, Bart Hessen designed and synthesized 1-(tetramethylcyclopentadienyl)-propoxy-titanium dichloride (see Formula 4), to which an appropriate alkyl lithium or a Grignard reagent was added to react to obtain a class of metallocene catalysts with a constrained geometry configuration containing propoxyl side chain monocene (see Formula 5, where R is selected from one of H, Ph, SiMe₃, and CMe₃). This type of catalysts is mainly used for catalyzing the polymerization of propylene.

In 2007, Professor Ying MU disclosed a class of metallocene catalysts with a constrained geometry configuration containing a phenoxy side chain in CN101130467A (see Formula 6). These catalysts use alkyl aluminum and a boron compound as a cocatalyst to catalyze a C6-C20 straight-chain α-olefin to obtain a colorless and transparent oily product with high viscosity, high viscosity index, and low pour point. The product can be served as a base oil of a lubricant. However, an excessively open coordination environment of an active center of this class of catalysts results in a lower molecular weight of the resulting polymer.

In 2008, Ying MU's group designed a constrained geometry metallocene-catalyst containing a single carbon atom bridged aryloxy (see Formula 7, where R₁ is selected from H (1), Me (2), or ^{t}Bu (3,4)); R₂ is selected from H (2,3) or ^{t}Bu (1,4)). This catalyst can be used to catalyze the polymerization of ethylene to prepare polyethylene with a medium molecular weight, or to catalyze the copolymerization of ethylene and 1-hexene to prepare an ethylene/1-hexene copolymer product with a medium molecular weight.

In 2009, Hidenori Hanaoka designed and synthesized a series of new titanium metal catalysts with a constrained geometry configuration (see Formulas 8 to 11, where Rs are Me and Et respectively, in formula 8; Rs are Me and Et respectively, in formula 9; R¹s are selected from H or Me and R²s are selected from Me and Et, in formula 10; Rs are Me and H respectively, in Formula 11). These catalysts are mainly used for the copolymerization of ethylene and 1-hexene, which can effectively improve a polymerization activity, produce a copolymer with a high molecular weight and ensure a high insertion rate of 1-hexene.

On this basis, in 2010, Hidenori Hanaoka et al. introduced fluorenyl into a phenoxy metal system to prepare a new metallocene catalyst (see Formula 12, where M is selected from Ti, Zr or Hf; R¹ is selected from H or ^{t}Bu; R² is selected from Me or Et; X is selected from NMe₂ or Cl), this metallocene catalyst can greatly enhance activity of copolymerization of ethylene and 1-hexene.

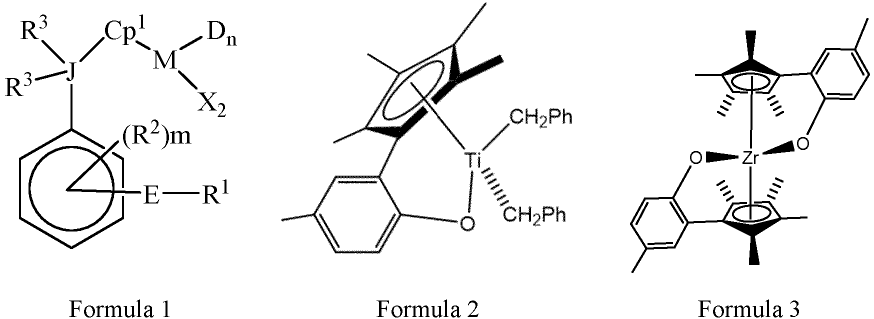

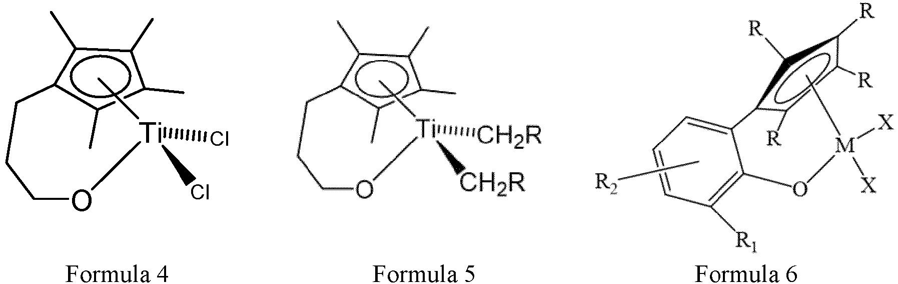

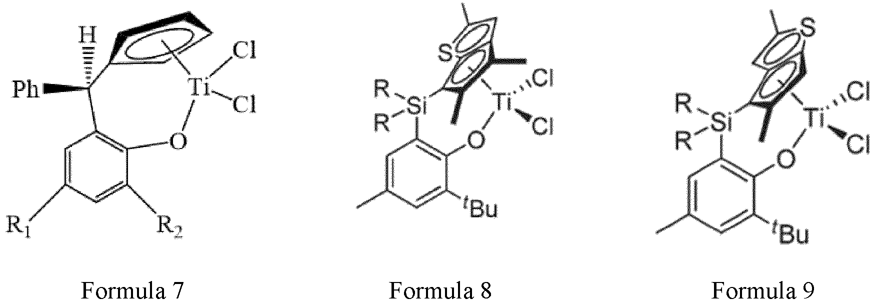

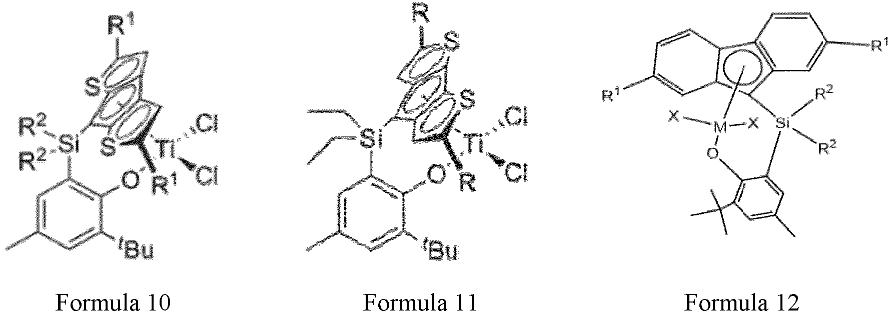

However, the metallocene compounds, including the above structural formulas, have limitations on both raw materials and products. For example, they can only be used to catalyze the polymerization reaction of a straight chain olefin with carbon atoms less than or equal to 6, but cannot be used to catalyze the polymerization reaction of a straight chain olefin with carbon atoms greater than 6, and also cannot be used to catalyze the polymerization reaction of a branched chain olefin with carbon atoms greater than or equal to 6, or when the metallocene compounds with the above structural formulas are used to catalyze the polymerization reaction of straight chain olefins with carbon atoms greater than or equal to 6, it is not possible to prepare a polymerization product with a high molecular weight.

### SUMMARY

The present application provides a metallocene compound that can be used for efficiently catalyzing a long straight chain α-olefin raw material and also a mixed long branched chain non-terminal olefin raw material, and obtaining a polymerization product with a target molecular weight according to demand.

The present application provides a preparation method for a metallocene compound, which can prepare a metallocene compound that is suitable for effectively catalyzing a long straight chains α-olefin raw material and a mixed long branched chain non-terminal olefin raw material, and obtaining a polymerization product with a target molecular weight according to demand.

The present application provides a catalyst system that is suitable for catalyzing a C6-C30 long straight chain α-olefin raw material and a mixed long branched chain non-terminal olefin raw material, and obtaining a polymerization product with a target molecular weight according to demand.

The present application provides a metallocene compound, including a structure as shown in Formula a: 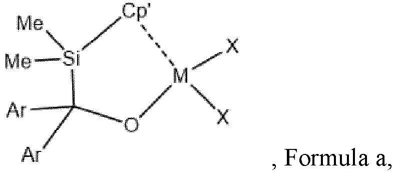
in which, Ar is selected from a substituted or unsubstituted C6-C30 aryl;
Cp' is selected from a substituted or unsubstituted cyclopentadienyl, indenyl, or fluorenyl;
X is at least one of halogen, substituted or unsubstituted C1-C30 alkyl, alkoxy, substituted or unsubstituted C2-C30 dialkylamino, alkenyl, or substituted or unsubstituted C6-C30 aryl; and
M is a transition metal element.

In the above metallocene compound, a substituent of C6-C30 aryl in Ar is selected from at least one of methyl, ethyl, methylene, isopropyl, vinyl, propenyl, and butenyl.

In the above metallocene compound, a substituent of cyclopentadienyl, indenyl, or fluorenyl in Cp' is selected from at least one of methyl, ethyl, n-propyl, isopropyl, n-butyl, isobutyl, and phenyl.

In the above metallocene compound, a substituent of C1-C30 alkyl, C1-C30 alkoxy, C2-C30 dialkylamino, C2-C30 alkenyl or C6-C30 aryl in X is selected from at least one of methyl, ethyl, methylene, isopropyl, vinyl, propenyl, and butenyl.

In the above metallocene compound, the metallocene compound includes the following structural formulas:

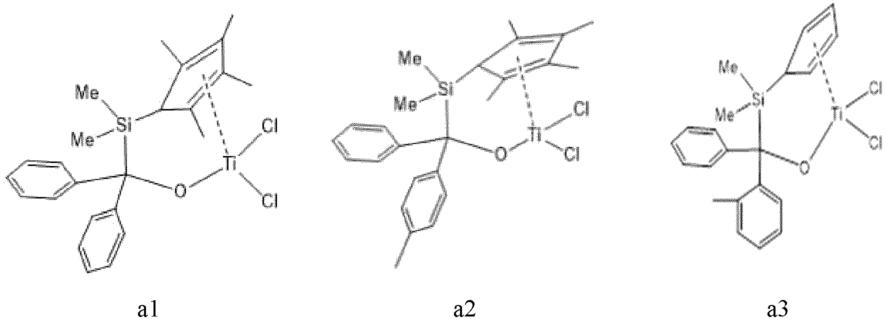

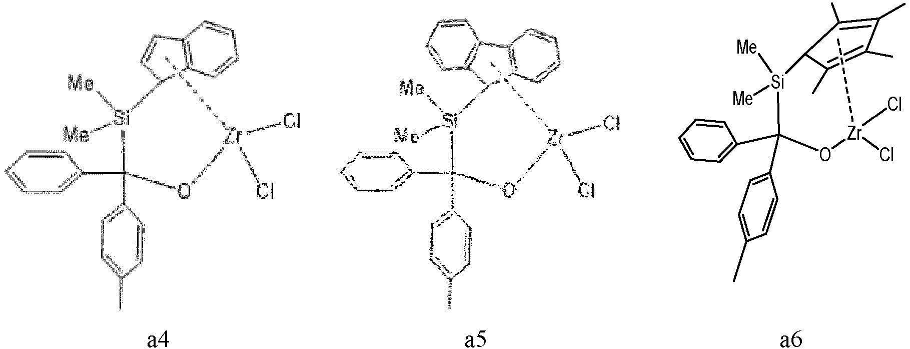

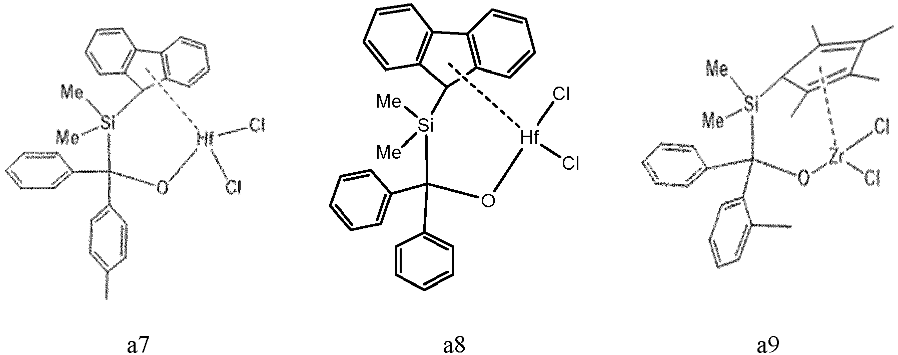

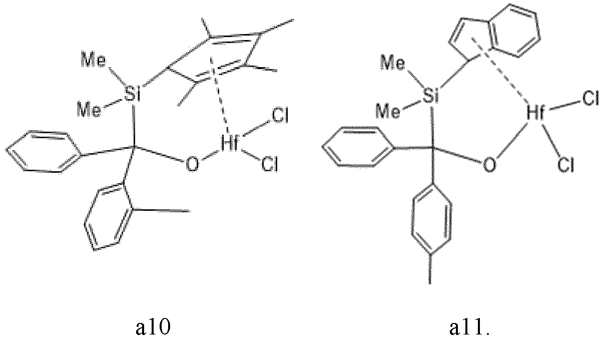

The present application further provides a preparation method of the above metallocene compound, including the following steps:
subjecting diarylmethanol to addition reaction with dihydropyran in presence of p-toluenesulfonic acid to produce a first compound;
subjecting the first compound to reaction with n-butyl lithium, and then adding dichlorodimethylsilane to a resulting system to obtain a second compound;
subjecting the second compound to reaction with a third compound to obtain a fourth compound, and subjecting the fourth compound to reaction with hydrochloric acid to obtain a ligand;
subjecting the ligand to reaction with a strong alkaline compound to obtain a ligand salt;
subjecting the ligand salt to reaction with MX₄ to obtain the metallocene compound;
where the third compound is obtained by reacting a fifth compound with n-butyl lithium;
the fifth compound is selected from one of substituted or unsubstituted cyclopentadiene, indene, or fluorene.

In the above preparation method, the strong alkaline compound is selected from at least one of n-butyl lithium, methyl lithium, methylmagnesium chloride, or benzylmagnesium chloride.

In the above preparation method, in a preparation process of the second compound, a molar ratio of diarylmethanol, dihydropyran, and first n-butyl lithium is (29.5-30.5): (59.5-60.5): (29.7-35.1); and/or,
in a preparation process of the ligand, a molar ratio of the second compound, the fifth compound, n-butyl lithium, and hydrochloric acid is (4.3-5.2): (4.2-4.8): (4.5-5.2): (9.8-10.4).

In the above preparation method, a molar ratio of the ligand, the strong alkaline compound, and MX₄ is (3.8-4.4): (8.0-9.2): (3.9-4.5).

The present application further provides a catalyst system, including the above metallocene compound.

The metallocene compound of the present application includes structures shown in formula a, and the metallocene compound is a compound with silicon-carbon-oxygen bridge heteroatom constrained geometry configuration. The metal center of the metallocene compound contains a five membered chelate ring, and two large steric hindrance aromatic groups are connected to the bridge carbon atom, rendering a coordination space environment more crowded and thus greatly improving a thermal stability of the metallocene compound. Thus, the metallocene compound exhibits a special high activity catalytic performance under a high temperature condition, high resistance to impurities, and long catalytic life. Therefore, the metallocene compound is suitable for catalyzing a C6-C30 long straight chain α-olefin raw material, and a mixed long branched chain non-terminal olefin raw material, and may obtain a polymerization product with target molecular weight according to demand.

The catalyst system of the present application includes the above metallocene compound and thus is suitable for catalyzing a C6-C30 long straight chain α-olefin raw material and a mixed long branched chain non-terminal olefin raw material, and may obtain a polymerization product with a target molecular weight according to demand.

### BRIEF DESCRIPTION OF DRAWINGS

In order to provide a clearer explanation of the technical solutions in the examples or related technologies of the present application, the following is a brief introduction to the drawings to be used in the examples or related technical descriptions of the present application. It is obvious that the drawings described below are only some of examples of the present application. For those skilled in the art, other drawings can be obtained based on these drawings without creative work.

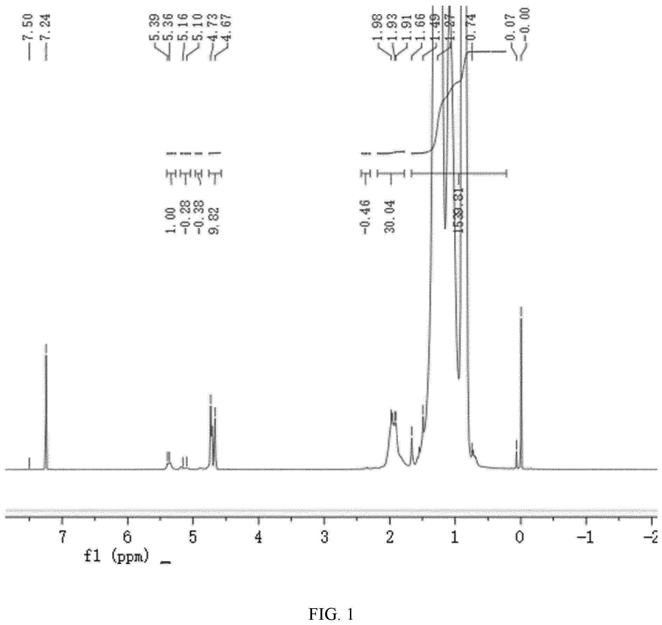

FIG. 1 is a nuclear magnetic resonance hydrogen spectrum (¹H NMR) of a polymerization product obtained from a polymerization reaction of 1-decene catalyzed by a metallocene compound in Example 1 of the present application.

### DESCRIPTION OF EMBODIMENTS

The following will provide a clear and complete description of the technical solutions in the examples of the present application in conjunction with the drawings. Obviously, the described examples are only some of the examples of the present application, not all of them. Based on the examples in the present application, all other examples obtained by a person of ordinary skill in the art without creative work fall within the protection scope of the present application.

A first aspect of the present application provides a metallocene compound, including a structure shown in Formula a: 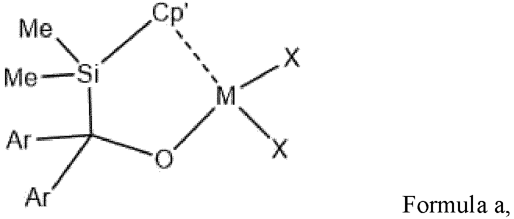
in which, Ar is selected from a substituted or unsubstituted C6-C30 aryl;
Cp' is selected from a substituted or unsubstituted cyclopentadienyl, indenyl, or fluorenyl;
X is at least one of halogen, substituted or unsubstituted C1-C30 alkyl, alkoxy, substituted or unsubstituted C2-C30 dialkylamino, alkenyl, or substituted or unsubstituted C6-C30 aryl; and
M is a transition metal element.

Specifically, Ar is selected from a substituted or unsubstituted C6-C30 aryl (e.g., phenyl, biphenyl, substituted phenyl, or substituted biphenyl);
when Cp' is selected from substituted cyclopentadienyl, substituted indenyl or substituted fluorenyl, the substituent may be one or multiple, for example, the substituent may be one methyl or two methyl, or may be one methyl and one ethyl;
X may be halogen (e.g., -F, -Cl, -Br, -I), substituted or unsubstituted C1-C30 alkyl (e.g., C1-C30 straight chain alkyl, C1-C30 branched chain alkyl), alkoxy (e.g., C1-C30 branched chain alkoxy, C1-C30 straight chain alkoxy), substituted or unsubstituted C2-C30 dialkylamine (e.g., two C1-C15 straight chain alkyl substituted amino), alkenyl (e.g., C2-C30 straight chain alkenyl), or substituted or unsubstituted C6-C30 aryl (e.g., phenyl, biphenyl, substituted phenyl, or substituted biphenyl); and
M is a transition metal element (such as Ti, Ni, Zr, Hf).

The metallocene compound of the present application is a compound with a silicon-carbon-oxygen bridge heteroatom constrained geometry configuration, the metal center of the metallocene compound contains a five membered chelate ring, and two large steric hindrance aromatic groups are connected to the bridge carbon atom, rendering a coordination space environment more crowded and thus greatly improving a thermal stability of the metallocene compound. Thus, the metallocene compound exhibits a special high activity catalytic performance under a high temperature condition, high resistance to impurities, and long catalytic life. Therefore, the metallocene compound is suitable for a long straight chain α-olefin raw material and a long branched chain non-terminal olefin raw material, and can obtain a polymerization product with target molecular weight according to demand. For example, it may be applied to a polymerization reaction of a straight chain olefin with carbon atoms greater than 6, or to a polymerization reaction of a branched chain system with carbon atoms greater than or equal to 6, and after the polymerization reaction, a polymer with a high molecular weight may be obtained.

The present application does not specifically limit a substituent of C6-C30 aryl in Ar. In some embodiments, the substituent of C6-C30 aryl in Ar may be selected from at least one of methyl, ethyl, methylene, isopropyl, vinyl, propenyl, and butenyl.

The present application does not specially limit a substituent of cyclopentadienyl, indenyl, or fluorene in Cp'. In some embodiments, the substituent of Cp' is selected from at least one of methyl, ethyl, n-propyl, isopropyl, n-butyl, isobutyl, or phenyl. Preferably, the substituent of cyclopentadienyl, indenyl, or fluorenyl in Cp' is selected from at least one of methyl, ethyl, n-propyl, isopropyl, and butyl.

In some embodiments of the present application, a substituent of C1-C30 alkyl, C1-C30 alkoxy, C2-C30 dialkylamino, C2-C30 alkenyl or C6-C30 aryl in X is selected from at least one of methyl, ethyl, methylene, isopropyl, vinyl, propenyl, and butenyl.

In some embodiments of the present application, the metallocene compound include the following structural formulas:

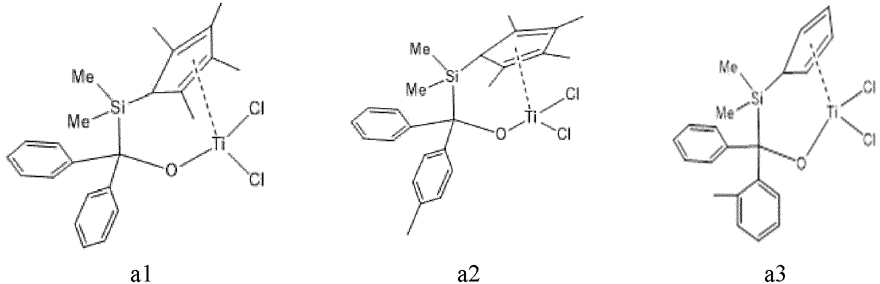

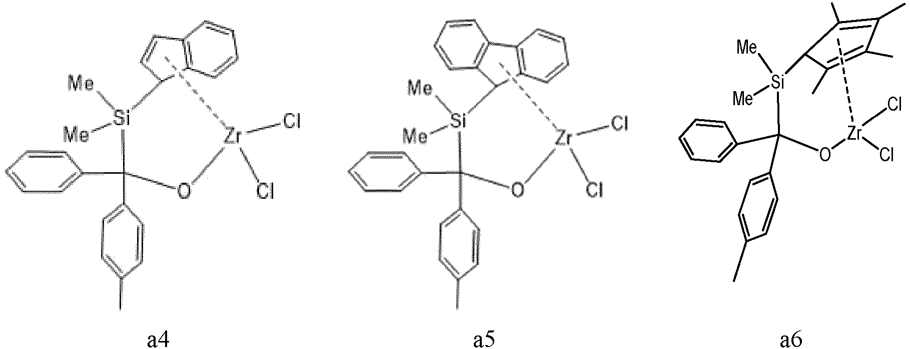

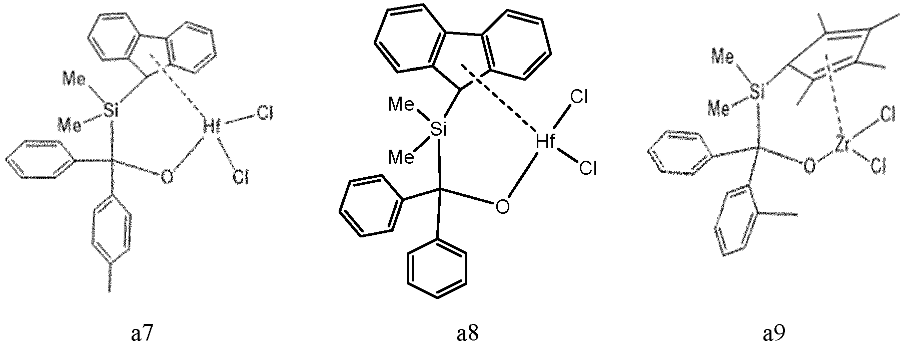

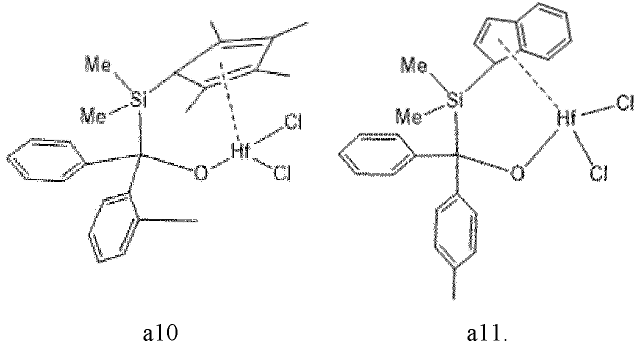

A second aspect of the present application provides a preparation method of the above metallocene compound, including the following steps:
subjecting diarylmethanol to addition reaction with dihydropyran in presence of p-toluenesulfonic acid to produce a first compound;
subjecting the first compound to reaction with n-butyl lithium, and then adding dichlorodimethylsilane to a resulting system to obtain a second compound;
subjecting the second compound to reaction with a third compound to obtain a fourth compound, and subjecting the fourth compound to reaction with hydrochloric acid to obtain a ligand;
subjecting the ligand to reaction with a strong alkaline compound to obtain a ligand salt;
subjecting the ligand salt to reaction with MX₄ to obtain the metallocene compound;
where the third compound is obtained by reacting a fifth compound with n-butyl lithium;
the fifth compound is selected from one of substituted or unsubstituted cyclopentadiene, indene, or fluorene.

In the present application, the ligand may be prepared by a method including the following steps, and a specific reaction formula is shown in Formula 13:
subjecting diarylmethanol to addition reaction with dihydropyran in presence of p-toluenesulfonic acid, to produce the first compound diarylmethyl-2-tetrahydropyranyl ether; it may be understood that this step requires to react in a solvent, and the solvent may be dichloromethane;
subjecting the diarylmethyl-2-tetrahydropyranyl ether to reaction with the n-butyl lithium to obtain an intermediate product, and then subjecting the intermediate product to reaction with dichlorodimethylsilane to obtain the second compound (c);
subjecting the fifth compound (Cp') to reaction with the n-butyl lithium to obtain the third compound (Cp' HLi), then subjecting the third compound (Cp' HLi) to reaction with the second compound (c) to obtain the fourth compound (d), and finally subjecting the fourth compound (d) to reaction with hydrochloric acid to obtain the ligand;
where it may be understood that the two steps require to react in a solvent, and the solvent may be diethyl ether, 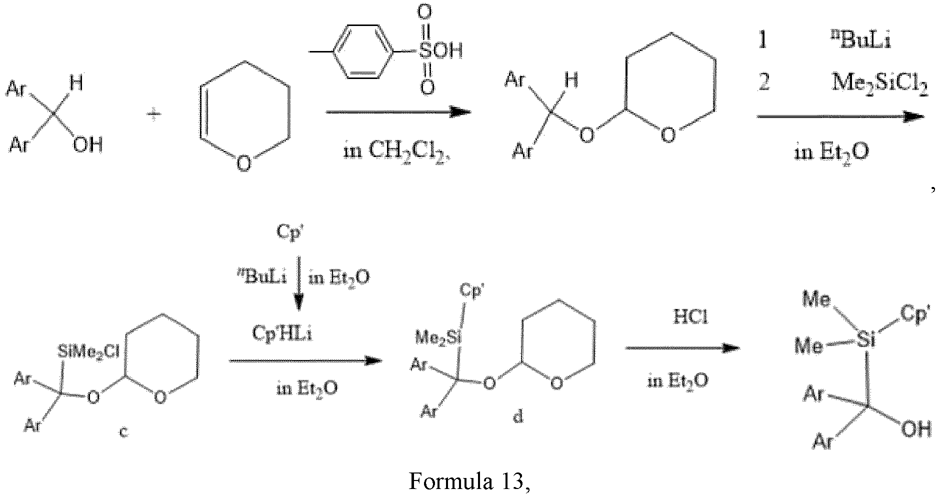
subjecting the ligand to reaction with the strong alkaline compound to produce the ligand salt and subjecting the ligand salt to reaction with MX₄ to produce the metallocene compound.

In some embodiments of the present application, the strong alkaline compound is selected from at least one of n-butyl lithium, methyl lithium, methylmagnesium chloride, or benzylmagnesium chloride. When the strong alkaline compound is selected from the above substances, it is more conducive to the reaction between the ligand and the strong alkaline compound to produce the ligand salt.

A reaction formula for the metallocene compound in some embodiments of the present application is shown in Formula 14:

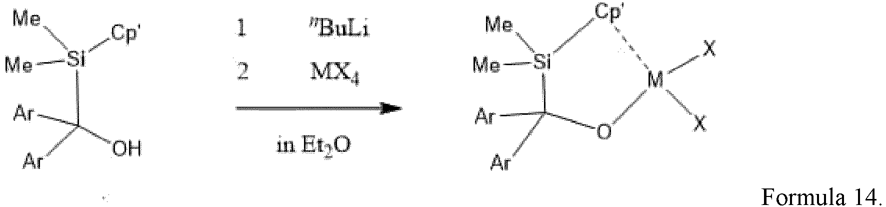

In some embodiments of the present application, in a preparation process of the second compound, a molar ratio of diarylmethanol, dihydropyran, and first n-butyl lithium is (29.5-30.5): (59.5-60.5): (29.7-35.1); and
in a preparation process of the ligand, when a molar ratio of the second compound, the fifth compound, n-butyl lithium, and hydrochloric acid is (4.3-5.2): (4.2-4.8): (4.5-5.2): (9.8-10.4), a higher purity ligand may be produced, which is beneficial for obtaining the metallocene compound of the present application, where the metallocene compound is suitable for a C6-C30 long linear chain α-olefin raw material and also a mixed long branched chain non-terminal olefin raw material, and may obtain a polymerization product with a target molecular weight according to demand.

Furthermore, when a molar ratio of the ligand, the strong alkaline compound, and MX₄ is (3.8-4.4): (8.0-9.2): (3.9-4.5), the ligand salt can be better produced, and can react with MX₄ to obtain the metallocene compound of the present application.

A third aspect of the present application provides a catalyst system, including the above metallocene compound.

It may be understood that the metallocene compound of the present application may be combined with other compound, including a cocatalyst, to form a catalyst system for catalyzing a polymerization reaction of an olefin or other compound.

The catalyst system of the present application includes the above metallocene compound, and thus is suitable for catalyzing a C6-C30 long straight chain α-olefin raw material and also a mixed long branched chain non-terminal olefin raw material, and may obtain a polymerization product with a target molecular weight according to demand.

The technical solutions of the present application will be further described in conjunction with specific examples below.

The specifications and sources of chemicals in the examples and comparative examples of the present application are shown in Table 1.

**Table 1**

| Name of chemicals | Specification | Manufacturer |
|---|---|---|
| n-Butyl lithium | 2.5M | Hubei Yunmei Chemical Group Co., Ltd |
| Ethanol | Analytical pure | Tianjin Damao Chemical Reagent Factory |
| 1-Hecene | Analytical pure | Aladdin Chemical Reagent Co., Ltd |
| Mixed decene | Boiling point: 150~180°C | Dushanzi Petrochemical Company |
| Tetrahydrofuran | Analytical pure | Sinopharm Company |
| Diphenyl methanol | Analytical pure | Aladdin Chemical Reagent Co., Ltd |
| (p-tolyl)(phenyl)methanol | Analytical pure | Aladdin Chemical Reagent Co., Ltd |
| (o-phenyl)(phenyl)methanol | Analytical pure | Aladdin Chemical Reagent Co., Ltd |
| Diethyl ether | Analytical pure | Tianjin Damao Chemical Reagent Factory |
| Dimethyldichlorosilane | Analytical pure | Aladdin Chemical Reagent Co., Ltd |
| Column chromatography silica gel | Analytical pure | Sinopharm Company |
| Diluted hydrochloric acid | 1N | Sinopharm Company |
| p-Toluenesulfonic acid | Analytical pure | Sinopharm Company |
| Tetramethylcyclopentadiene | Analytical pure | Aladdin Chemical Reagent Co., Ltd |
| Fluorene | Analytical pure | Aladdin Chemical Reagent Co., Ltd |
| Indene | Analytical pure | Aladdin Chemical Reagent Co., Ltd |
| Triisobutyl aluminum | Analytical pure | Aladdin Chemical Reagent Co., Ltd |
| Trityl tetrakis(pentafluorophenyl)borate | Analytical pure | Aladdin Chemical Reagent Co., Ltd |
| Potassium t-butoxide | Analytical pure | Sinopharm Company |
| Dichloromethane | Analytical pure | Sinopharm Company |
| n-Hexane | Analytical pure | Sinopharm Company |

### Example 1

The ligand of the metallocene compound of this Example is prepared by a preparation method including the following steps:
Diphenyl methanol (5527mg, 30 mmol) and 30 mL of dichloromethane were placed in a 100 mL round bottom flask, p-toluenesulfonic acid (90 mg, 0.48 mmol) was added with stirring, and after continued stirring for 5 minutes, dihydropyran (5047 mg, 60 mmol) was quickly added at one time. After a few seconds, the resulting reaction solution was changed from yellow to red, and potassium t-butoxide (200 mg, 1.8 mmol) was immediately added to the resulting reaction solution to quench the reaction; solvent and excess dihydropyran were evaporated at 50°C under reduced pressure, a product was extracted with 60 mL of pentane and filtered through diatomaceous earth so as to remove the solvent to obtain a product, diphenylmethyl-2-tetrahydropyranyl ether (6912 mg, 27 mmol, 90.0%).
Diphenylmethyl-2-tetrahydropyranyl ether (1342 mg, 5 mmol) was dissolved in 20 mL of diethyl ether, 2 mL of n-butyl lithium solution (2.5 M, 5.0 mmol) was slowly added thereto at room temperature. After 2 hours of reaction, the resulting reaction solution was slowly added a diethyl ether solution (20 mL) containing 15 mmol of dimethyldichlorosilane at an ice water bath temperature, raised to room temperature, and continued to react for 1 hour. The solvent and excess dimethyldichlorosilane were removed by distillation under reduced pressure, and an obtained solid was dissolved again in 20 mL of diethyl ether and set aside; tetramethylcyclopentadiene (611 mg, 5.0 mmol) was dissolved in 20 mL of diethyl ether, to which 2 mL of n-butyl lithium solution (2.5 M, 5.0 mmol) was slowly added at room temperature. After 2 hours of reaction, the reaction solution was slowly added to the aforementioned diethyl ether solution at an ice water bath temperature, reacted overnight with stirring at room temperature; the reaction was quenched with 50 mL of diluted hydrochloric acid (1N) and continued to be stirred for 1 hour to separate an organic phase. The organic phase was further washed twice with 50 mL of distilled water and dried with anhydrous magnesium sulfate and then the solvent was removed by rotary evaporation; a crude product was separated and purified using column chromatography (200 mesh column chromatography silica gel, eluent (petroleum ether: dichloromethane=8:2)) to obtain ligand b1, tetramethylcyclopentadienyl-diphenylhydroxymethyl-dimethylsilane (1651mg, 4.55 mmol, 91%).
¹HNMR data of b1 (400 MHz, CDCl₃): δ= 0.38 (d, 6H, Me₂Si), 1.75 (d, 6H, Me₄C₅H), 1.96 (s, 6H, Me₄C₅H), 4.40 (s, 1H, HC₅Me₄), 4.69 (s, 1H, OH), 7.23 (d, 4H, Ph), 7.24 (t, 2H, Ph), 7.24 (t, 4H, Ph).

The metallocene compound of this Example is prepared by a preparation method including the following steps:
The b1 (1541 mg, 4.25 mmol) was dissolved in 50 mL of diethyl ether, and 3.4 mL of n-butyl lithium solution (2.5 M, 8.50 mmol) was slowly added thereto at room temperature, and after stirring overnight for reaction, a reaction mixture was slowly added to 20 mL of solution of titanium tetrachloride (806 mg, 4.25 mmol) in diethyl ether at -20 °C. Then the reaction solution was raised naturally to room temperature and stirred overnight; diethyl ether was evaporated under reduced pressure, the reaction product was dissolved in 30 mL of dichloromethane, an insoluble substance was filtered out. About 20mL of n-hexane was added to the solution until precipitation begins to form, then slow concentration was performed to allow the product to crystallize and precipitate; the product was filtered out, the solvent was drained under vacuum, to obtain a metallocene compound a1, dimethyl silicon bridged tetramethylcyclopentadienyl-[(diphenyl)methoxy]-titanium dichloride (896 mg, 1.87 mmol, 44%).
¹HNMR data of a1 (400 MHz, CDCl₃): δ= 0.63 (s, 6H, Me₂Si), 1.909 (d, 6H, Me₄C₅H), 1.910 (s, 6H, Me₄C₅H), 7.17 (d, 4H, Ph), 7.24 (t, 2H, Ph), 7.31 (d, 4H, Ph).

### Example 2

The difference of the preparation method of the ligand of the metallocene compound in this Example from Example 1 is that:
diphenyl methanol in Example 1 was replaced with (p-tolyl)(phenyl)methanol, and a product, (p-tolyl)(phenyl)methyl-2-tetrahydropyranyl ether (6793 mg, 25.16 mmol, 83.87%), was obtained;
diphenylmethyl-2-tetrahydropyranyl ether in Example 1 was replaced with (p-tolyl)(phenyl)methyl-2-tetrahydropyranyl ether, and ligand b2, tetramethylcyclopentadienyl-[(p-tolyl)(phenyl)hydroxymethyl]-dimethylsilane (1680 mg, 4.45 mmol, 89%) was obtained.
¹HNMR data of b2 (400 MHz, CDCl₃): δ= 0.38 (s, 6H, Me₂Si), 1.75 (d, 6H, Me₄C₅H), 1.96 (s, 6H, Me₄C₅H), 2.35 (s, 3H, Me-Ph), 4.41 (m, 1H, HC₅Me₄), 4.69 (s, 1H, -OH), 7.13 (d, 2H, Ph-Me), 7.16 (d, 2H, Ph-Me), 7.22 (d, 2H, Ph), 7.23 (t, 1H, Ph), 7.33 (t, 2H, Ph).

The preparation method of the metallocene compound in this Example differs from Example 1 in that:
the ligand b1 was replaced with the ligand b2, and a metallocene compound a2, dimethylsilyl bridged-tetramethylcyclopentadienyl-[(p-tolyl)(phenyl)methoxy]-titanium dichloride (994.16 mg, 2.003 mmol, 45%), was obtained.
¹HNMR data of a2 (400 MHz, CDCl₃): δ= 0.63 (s, 6H, Me₂Si), 1.91 (d, 6H, Me₄C₅H), 1.92 (s, 6H, Me₄C₅H), 2.35 (s, 3H, Me-Ph), 7.03 (s, 2H, Ph-Me), 7.13 (d, 2H, Ph-Me), 7.17 (d, 2H, Ph-Me), 7.23 (t, 1H, Ph), 7.33 (t, 2H, Ph).

### Example 3

The preparation method of the ligand of the metallocene compound in this Example differs from Example 1 in that:
diphenyl methanol in Example 1 was replaced with (o-methylphenyl)(phenyl)methanol, and a product, (o-methylphenyl)(phenyl)methyl-2-tetrahydropyranyl ether (6777 mg, 25.10 mmol, 83.67%), was obtained;
diphenylmethyl-2-tetrahydropyranyl ether in Example 1 was replaced with (o-methylphenyl)(phenyl)methyl-2-tetrahydropyranyl ether, the tetramethylcyclopentadiene in Example 1 was replaced with cyclopentadiene, and ligand b3, cyclopentadienyl-[(o-methylphenyl)(phenyl) hydroxymethyl]-dimethylsilane (1343 mg, 4.36 mmol, 87.2%), was obtained.
¹HNMR data of b3 (400 MHz, CDCl₃): δ= 0.33 (s, 6H, Me₂Si), 2.39 (d, 3H, Me-Ph), 3.20 (m, 2H, C₅H₄), 4.70 (s, 3H, OH), 6.32 (t, 2H, C₅H₅), 6.42 (t, 2H, C₅H₅), 7.15 (d, 1H, Ph-Me), 7.18 (d, 1H, Ph-Me), 7.20 (s, 1H, Ph-Me), 7.21 (s, 1H, Ph-Me), 7.23 (t, 1H, Ph), 7.30 (d, 2H, Ph), 7.33 (t, 2H, Ph).

The preparation method of the metallocene compound in this Example differs from Example 1 in that:
the ligand b1 was replaced with the ligand b3, a metallocene compound a3, dimethylsilyl bridged cyclopentadienyl-[(o-methylphenyl)(phenyl)methoxy]-titanium dichloride (967 mg, 2.27 mmol, 52%), was obtained.
¹HNMR data of a3 (400 MHz, CDCl₃): δ= 0.57 (s, 6H, Me₂Si), 2.31 (d, 3H, Me-Ph), 6.51 (d, 2H, C₅H₄), 6.54 (t, 2H, C₅H₄), 7.05 (d, 1H, Ph-Me), 7.16 (d, 2H, Ph), 7.18 (d, 2H, Ph-Me), 7.20 (d, 1H, Ph-Me), 7.23 (t, 1H, Ph), 7.27 (d, 1H, Ph-Me), 7.31 (t, 3H, Ph).

### Example 4

The preparation method of the ligand of the metallocene compound in this Example differs from Example 1 in that:
diphenyl methanol in Example 1 was replaced with (p-tolyl)(phenyl)methanol, and a product, (p-tolyl)(phenyl)methyl-2-tetrahydropyranyl ether (6793mg, 25.16mmol, 83.87%), was obtained;
diphenylmethyl-2-tetrahydropyranyl ether in Example 1 was replaced with (p-tolyl)(phenyl)methyl-2-tetrahydropyranyl ether, the tetramethylcyclopentadiene in Example 1 was replaced with indene, and a ligand b4, indenyl-[(p-tolyl)(phenyl)hydroxymethyl]-dimethylsilane (1422 mg, 4.18 mmol, 83.6%), was obtained.
¹HNMR data of b4 (400 MHz, CDCl₃): δ= 0.34 (s, 6H, Me₂Si), 2.35 (d, 3H, Me-Ph), 4.12 (d, 1H, C₃H₃-C₆H₄), 4.65 (s, 1H, OH), 6.45 (t, 1H, C₃H₃-C₆H₄), 6.68 (d, 1H, C₃H₃-C₆H₄), 7.13 (d, 2H, Ph-Me), 7.16 (d, 2H, Ph-Me), 7.22 (d, 2H, Ph), 7.23 (t, 1H, Ph), 7.28 (t, 1H, C₆H₄-C₃H₃), 7.32 (t, 1H, C₆H₄-C₃H₃), 7.33 (t, 2H, Ph), 7.34 (d, 1H, C₆H₄-C₃H₃), 7.41 (t, 2H, C₆H₄-C₃H₃).

The preparation method of the metallocene compound in this Example differs from Example 1 in that:
the ligand b1 was replaced with the ligand b4, titanium tetrachloride was replaced with zirconium tetrachloride, and a metallocene compound a4, dimethylsilyl bridged indenyl-(p-tolyl)(phenyl)methoxy zirconium dichloride (1130 mg, 2.34 mmol, 56.0%), was obtained.
¹HNMR data of a4 (400 MHz, CDCl₃): δ= 0.63 (s, 6H, Me₂Si), 2.35 (s, 3H, Me-Ph), 6.69 (d, 1H, C₃H₃-C₆H₄), 6.94 (d, 1H, C₃H₃-C₆H₄), 7.05 (d, 2H, Ph-Me), 7.14 (d, 2H, Ph-Me), 7.15 (d, 2H, Ph-Me), 7.23 (t, 1H, Ph), 7.27 (t, 1H, C₆H₄-C₃H₃), 7.31 (t, 2H, Ph), 7.36 (d, 1H, C₆H₄-C₃H₃), 7.3 (d, 1H, C₆H₄-C₃H₃), 7.39 (t, 1H, C₆H₄-C₃H₃).

### Example 5

The preparation method of the ligand of the metallocene compound in this Example differs from Example 1 in that:
diphenyl methanol in Example 1 was replaced with (p-tolyl)(phenyl)methanol and a product, (p-tolyl)(phenyl)methyl-2-tetrahydropyranyl ether (6793mg, 25.16mmol, 83.87%), was obtained;
diphenylmethyl-2-tetrahydropyranyl ether in Example 1 was replaced with (p-tolyl)(phenyl)methyl-2-tetrahydropyranyl ether, tetramethylcyclopentadiene in Example 1 was replaced with fluorene, and a ligand b5, fluorenyl-[(p-tolyl)(phenyl)hydroxymethyl]-dimethylsilane (1769mg, 4.24 mmol, 84.8%), was obtained.
¹HNMR data of b5 (400 MHz, CDCl₃): δ= 0.45 (s, 6H, Me₂Si), 2.35 (s, 3H, Me-Ph), 4.57 (d, 1H, OH), 5.31 (s, 1H, C₁₃H₉), 7.13 (d, 2H, Ph-Me), 7.15 (d, 2H, Ph-Me), 7.24 (t, 1H, Ph), 7.33 (t, 2H, Ph), 7.35 (t, 2H, C₁₃H₉), 7.40 (t, 2H, C₁₃H₉), 7.55 (d, 2H, C₁₃H₉), 7.73 (d), 2H, C₁₃H₉).

The preparation method of the metallocene compound in this Example differs from Example 1 in that:
the ligand b1 was replaced with ligand b5, titanium tetrachloride was replaced with zirconium tetrachloride, and a metallocene compound a5, dimethylsilyl bridged fluorenyl-[(p-tolyl)(phenyl)methoxy] zirconium dichloride (1250 mg, 2.15 mmol, 50.7%), was obtained.
¹HNMR data of a5 (400 MHz, CDCl₃): δ= 0.57 (s, 6H, Me₂Si), 2.35 (s, 3H, Me-Ph), 7.06 (d, 2H, Me-Ph), 7.13 (d, 2H, C₁₃H₉), 7.15 (d, 2H, Ph-Me), 7.16 (d, 2H, Ph), 7.24 (t, 1H, Ph), 7.30 (t, 2H, C₁₃H₉), 7.31 (t, 2H, Ph), 7.36 (t, 2H, C₁₃H₉), 7.51 (t, 2H, C₁₃H₉).

### Example 6

The preparation method of the ligand of the metallocene compound in this Example is the same as that in Example 2.

The preparation method of the metallocene compound in this Example differs from Example 1 in that:
the ligand b1 was replaced with the ligand b2, titanium tetrachloride was replaced with zirconium tetrachloride, and a metallocene compound a6, dimethylsilyl bridged tetramethylcyclopentadienyl-[(p-tolyl)(phenyl)methoxy] zirconium dichloride (1090 mg, 2.08 mmol, 44.8%), was obtained.

¹HNMR data of dimethylsilyl bridged tetramethylcyclopentadienyl-[(p-tolyl)(phenyl)methoxy] zirconium dichloride (400 MHz, CDCl₃): δ= 0.67 (s, 6H, Me₂Si), 1.84 (d, 6H, Me₄C₅), 1.92 (s, 6H, Me₄C₅), 2.35 (s, 3H, Me-Ph), 7.05 (d, 2H, Ph-Me), 7.14 (d, 2H, Ph-Me), 7.16 (d, 2H, Ph), 7.24 (t, 1H, Ph), 7.33 (t, 2H, Ph).

### Example 7

The preparation method of the ligand of the metallocene compound in this Example is the same as that in Example 5.

The preparation method of the metallocene compound in this Example differs from Example 1 in that:
the ligand b1 was replaced with the ligand b5, titanium tetrachloride was replaced with HfCl₄, and a metallocene compound a7, dimethylsilyl bridged fluorenyl-[(p-tolyl)(phenyl)methoxy] zirconium dichloride (1090 mg, 2.08 mmol, 44.8%), was obtained.
¹HNMR data of a7 (400 MHz, CDCl₃): δ= 0.69 (s, 6H, Me₂Si), 2.35 (s, 3H, Me-Ph), 7.04 (d, 2H, Ph-Me), 7.14 (d, 2H, Ph-Me), 7.15 (d, 2H, C₁₃H₈), 7.18 (d, 2H, Ph), 7.21 (t, 1H, Ph), 7.31 (t, 2H, Ph), 7.33 (t, 2H, C₁₃H₈), 7.36 (d, 2H, C₁₃H₈), 7.51 (t, 2H, C₁₃H₈).

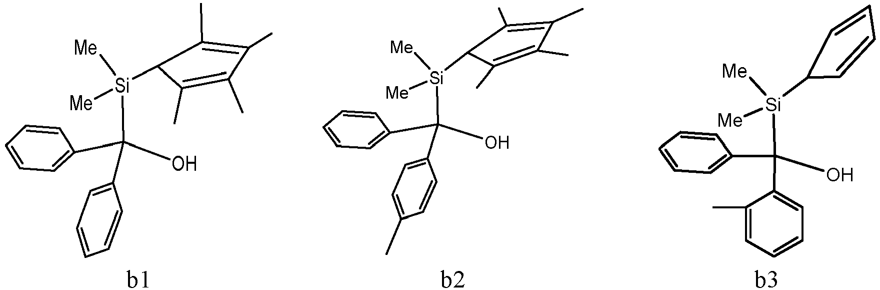

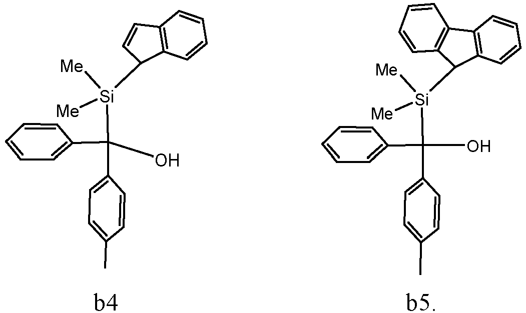

### Experimental examples

### Experiment Example 1

The metallocene compounds of Examples 1-7, 2,4-di-tert-butyl-6-(2,3,4,5-tetramethylcyclopentadienyl)phenoxy titanium dichloride (Comparative Example 1), (4,6-di-tert-butyl-9-fluorenyl)phenoxy titanium dichloride (Comparative Example 2), (3,4-diphenyl-6-cyclopentadienyl)phenoxy titanium dichloride (Comparative Example 3) and rac-vinyl-bis (4,5,6,7-tetrahydro-1-indenyl) zirconium dichloride (Comparative Example 4) were used as catalysts, respectively, to catalyze the polymerization reaction of 1-decene, specifically including the following:
A 300mL of stainless-steel polymerization reactor with magnetic stirring paddles was heated to 90 °C, vacuumed for 1 hour, and 150mL of 1-decene liquid containing 0.4mL of triisobutyl aluminum was introduced thereto. Then, 10mL of toluene solution containing 5mg of Ph₃CB(C₆F₅)₄ and 2mg of catalyst were added to the reactor, a reaction temperature was controlled to 90 °C, stirring for 1.5 hours of reaction, 2mL of anhydrous ethanol was added to the reactor so as to terminate the reaction to obtain a product. This crude product was depressurized to separate toluene, monomer, and dimer, to obtain a final polymerization product.

Catalytic activity of catalyst, yield of polymerization product, conversion rate of 1-decene, and weight average molecular weight, kinematic viscosity at 100 °C, viscosity index, and pour point of obtained polymerization product were tested, respectively. The test results are shown in Table 2.

Where, the conversion rate of 1-decene=(mass of 1-decene before reaction - mass of 1-decene after reaction)/mass of 1-decene before reaction × 100%; Yield of polymerization product = (mass of 1-decene before reaction - mass of 1-decene after reaction - mass of dimer after reaction)/mass of 1-decene before reaction × 100%;

Catalytic activity of catalyst = (total mass of reaction product)/number of moles of catalyst/catalytic time/number of active sites, where the number of active sites of the metallocene compound is 1;

The kinematic viscosity of polymerization product is determined according to GB/T256-1988 method: the kinematic viscosity of the obtained polymerization product samples at 40 °C and 100 °C is measured using a SYP1003V1 kinematic viscosity tester, and then, the viscosity index is calculated according to a conversion relationship between the viscosity and the viscosity index (ASTMD2270 method);

The pour point of polymerization product is measured using GB/T3535-83 (91);

The weight average molecular weight of polymerization product is measured using GB/T 27843-2011.

**Table 2**

| | Conversion rate % | Yield % | Kinematic viscosity at 100°C, mm²/s | Activity × 10⁶ g/mol M•h | Viscosity index | Pour point °C | Weight average molecular weight |
|---|---|---|---|---|---|---|---|
| Example 1 | 96.00 | 95.44 | 28.25 | 16.60 | 153 | -44 | 4820 |
| Example 2 | 96.11 | 93.28 | 25.13 | 17.14 | 148 | -46 | 4320 |
| Example 3 | 95.65 | 92.02 | 29.57 | 7.02 | 155 | -50 | 4058 |
| Example 4 | 97.32 | 95.01 | 26.18 | 18.70 | 149 | -52 | 3954 |
| Example 5 | 95.28 | 93.45 | 32.57 | 20.07 | 168 | -54 | 3322 |
| Example 6 | 96.14 | 92.15 | 30.19 | 18.68 | 166 | -51 | 3545 |
| Example 7 | 95.32 | 94.24 | 38.42 | 23.16 | 172 | -43 | 3728 |
| Comparative Example 1 | 78.25 | 77.95 | 17.26 | 10.71 | 124 | -53 | 2842 |
| Comparative Example 2 | 77.56 | 77.03 | 20.13 | 13.98 | 134 | -55 | 2734 |
| Comparative Example 3 | 74.35 | 73.85 | 22.15 | 11.28 | 137 | -47 | 3672 |
| Comparative Example 4 | 84.09 | 83.25 | 24.1 | 13.06 | 142 | -53 | 2834 |

From Table 2, it can be seen that when the metallocene compounds prepared in the Examples of the present application catalyze the polymerization reaction of 1-decene, 1-decene has a high conversion rate, the metallocene compounds have high activity, and the obtained products have high yields and high molecular weights.

Nuclear magnetic resonance was used to test the polymer obtained from the polymerization reaction of 1-decene catalyzed by the metallocene compound in Example 1.

FIG. 1 is a nuclear magnetic resonance hydrogen spectrum (1H NMR) of the polymerization product obtained from the polymerization reaction of 1-decene catalyzed by the metallocene compound in Example 1 of the present application. It may be seen From FIG. 1 that a chemical shift value δ of the olefin double bond in the 1H NMR spectrum of the polymerization product obtained after cutting off toluene, 1-decene and dimer from the reaction products is: δ= 4.6-4.8ppm, indicating that an end of the olefin is a vinylidene group, which proves that an insertion mode of 1-decene during the polymerization reaction is 1,2-insertion.

### Experiment Example 2

The metallocene compound of Example 1, 2,4-di-tert-butyl-6-(2,3,4,5-tetramethylcyclopentadienyl)phenoxy titanium dichloride (Comparative Example 1), (4,6-di-tert-butyl-9-fluorenyl)phenoxy titanium dichloride (Comparative Example 2), (3,4-diphenyl-6-cyclopentadienyl)phenoxy titanium dichloride (Comparative Example 3) and rac-vinyl-bis-(4,5,6,7-tetrahydro-1-indenyl) zirconium dichloride (Comparative Example 4) were used as catalysts, respectively, to catalyze the polymerization reaction of a mixed decene liquid, specifically including the following:
A 300mL of a stainless-steel polymerization reactor with magnetic stirring paddles was heated to 70 °C, vacuumed for 1 hour, and after N₂ replacement for the reactor was performed for 2-3 times, 100mL of mixed decene liquid containing 0.4mL of triisobutyl aluminum (the mixed decene composition: 1-decane 30.99%, cis-4-decane 2.35%, trans-4-decane 8.60%, 4-ethyl-1-octene 19.43%, 3-propyl-1-heptane 22.83%, 2-butyl-1-hexene 12.26%, and 5-methyl-1-nonene 3.54%) was introduced, then, 10mL of toluene solution containing 5mg of Ph₃CB(C₆F₅)₄ and 2.2mg of catalyst were added to the reactor, the reaction temperature was controlled to 60 °C. After reaction for 1.5 hours with stirring, 5mL of anhydrous ethanol was added to the reactor to terminate the reaction to obtain a product. This crude product was depressurized to separate ethanol, toluene, monomer (mixed decene) and dimer, to obtain a final polymerization product.

The catalytic activity of catalyst, yield of polymerization product, conversion rate of mixed decene, and weight average molecular weight, kinematic viscosity at 100 °C, viscosity index, and pour point of obtained polymerization product were tested, respectively. The test results are shown in Table 3, and the test method refers to the testing method in Example 1.

**Table 3**

| | Conversion rate % | Yield % | Kinematic viscosity at 100°C, mm²/s | Activity × 10⁶ g/mol M•h | Viscosity index | Pour point °C | Weight average molecular weight |
|---|---|---|---|---|---|---|---|
| Example 1 | 70.26 | 69.08 | 220.12 | 7.37 | 248 | -37 | 11400 |
| Comparative Example 1 | 50.12 | 49.52 | 194.28 | 4.16 | 230 | -22 | 9080 |
| Comparative Example 2 | 43.12 | 42.78 | 120.76 | 4.71 | 205 | -30 | 5036 |
| Comparative Example 3 | 53.47 | 52.95 | 97.76 | 4.91 | 192 | -35 | 4720 |
| Comparative Example 4 | 65.33 | 64.15 | 130.02 | 6.13 | 229 | -33 | 6613 |

From Table 3, it can be seen that when the metallocene compound prepared in the Example of the present application catalyzes the polymerization reaction of the decene mixture, decene has a higher conversion rate, the metallocene compound has higher activity, and the obtained product has a higher yield.

The various examples in this specification are described in relevant ways, and the same and similar parts between examples may be referred to each other. Each example focuses on the difference from other examples. The above are only preferred example of the present application and are not intended to limit the protection scope of the present application. Any modifications, equivalent replacements, improvements, etc. made within the spirit and principles of the present application are included within the protection scope of the present application.

## Claims

1. A metallocene compound, comprising a structure as shown in Formula a: 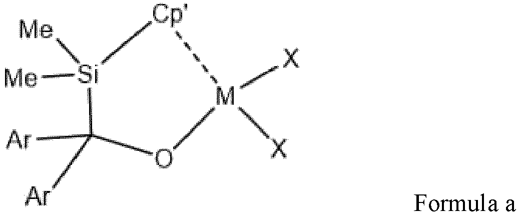
wherein, Ar is selected from a substituted or unsubstituted C6-C30 aryl;
Cp' is selected from a substituted or unsubstituted cyclopentadienyl, indenyl, or fluorenyl;
X is at least one of halogen, substituted or unsubstituted C1-C30 alkyl, alkoxy, substituted or unsubstituted C2-C30 dialkylamino, alkenyl, or substituted or unsubstituted C6-C30 aryl; and
M is a transition metal element.

2. The metallocene compound according to claim 1, wherein a substituent of C6-C30 aryl in Ar is selected from at least one of methyl, ethyl, methylene, isopropyl, vinyl, propenyl, and butenyl.

3. The metallocene compound according to claim 1 or 2, wherein a substituent of cyclopentadienyl, indenyl or fluorenyl in Cp' is selected from at least one of methyl, ethyl, n-propyl, isopropyl, n-butyl, isobutyl, and phenyl.

4. The metallocene compound according to any one of claims 1-3, wherein in X, a substituent of C1-C30 alkyl, C1-C30 alkoxy, C2-C30 dialkylamino, C2-C30 alkenyl or C6-C30 aryl is selected from at least one of methyl, ethyl, methylene, isopropyl, vinyl, propenyl, and butenyl.

5. The metallocene compound according to any one of claims 1-4, wherein the metallocene compound comprises the following structural formulas:

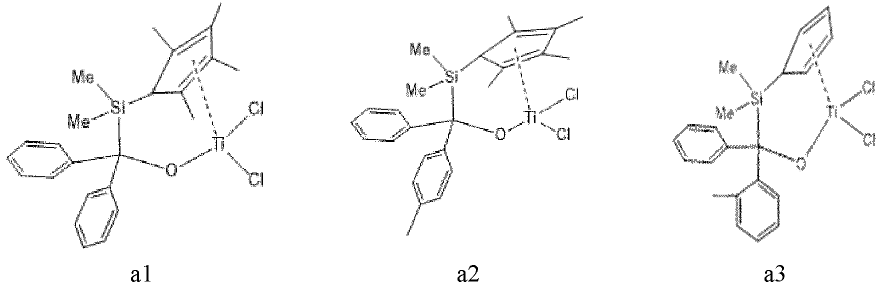

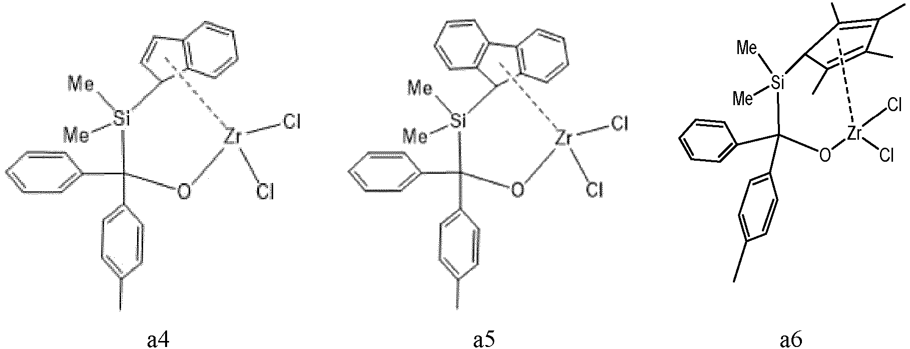

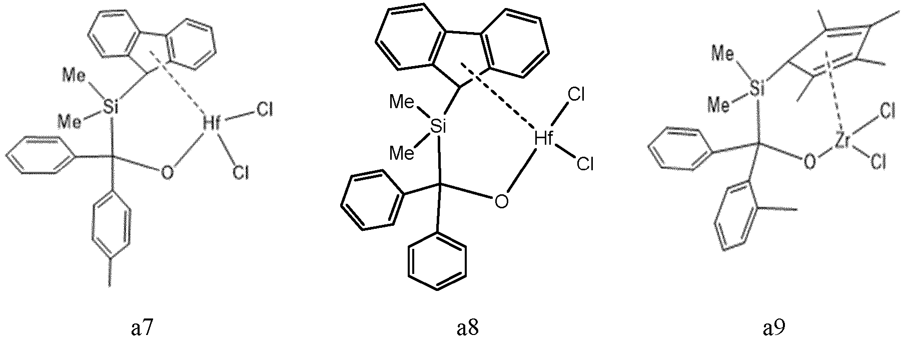

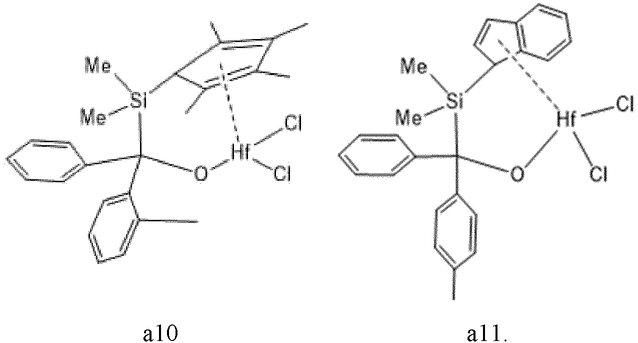

6. A preparation method of the metallocene compound according to any one of claims 1-5, comprising the following steps:
subjecting diarylmethanol to addition reaction with dihydropyran in presence of p-toluenesulfonic acid to produce a first compound;
subjecting the first compound to reaction with n-butyl lithium, and then adding dichlorodimethylsilane to a resulting system to obtain a second compound;
subjecting the second compound to reaction with a third compound to obtain a fourth compound, and subjecting the fourth compound to reaction with hydrochloric acid to obtain a ligand;
subjecting the ligand to reaction with a strong alkaline compound to obtain a ligand salt;
subjecting the ligand salt to reaction with MX₄ to obtain the metallocene compound;
wherein, the third compound is obtained by reacting a fifth compound with n-butyl lithium;
the fifth compound is selected from one of substituted or unsubstituted cyclopentadiene, indene, or fluorene.

7. The preparation method according to claim 6, wherein the strong alkaline compound is selected from at least one of n-butyl lithium, methyl lithium, methylmagnesium chloride or benzylmagnesium chloride.

8. The preparation method according to claim 6 or 7, wherein in a preparation process of the second compound, a molar ratio of diarylmethanol, dihydropyran, and first n-butyl lithium is (29.5-30.5): (59.5-60.5): (29.7-35.1); and/or
in a preparation process of the ligand, a molar ratio of the second compound, the fifth compound, n-butyl lithium, and hydrochloric acid is (4.3-5.2): (4.2-4.8): (4.5-5.2): (9.8-10.4).

9. The preparation method according to any one of claims 6-8, wherein a molar ratio of the ligand, the strong alkaline compound, and MX₄ is (3.8-4.4): (8.0-9.2): (3.9-4.5).

10. A catalyst system, comprising the metallocene compound according to any one of claims 1-5.
